(19) **Europäisches Patentamt**

**European Patent Office**

**Office européen des brevets**

(11) Veröffentlichungsnummer: **0 321 735**

**A2**

(12) **EUROPÄISCHE PATENTANMELDUNG**

(21) Anmeldenummer: **88119773.5**

(22) Anmeldetag: **28.11.88**

(51) Int. Cl.4: **C08J 5/04 , B29C 67/14**

(30) Priorität: **08.12.87 DE 3741539**

(43) Veröffentlichungstag der Anmeldung:
**28.06.89 Patentblatt 89/26**

(84) Benannte Vertragsstaaten:
**BE DE ES FR GB IT NL**

(71) Anmelder: **BAYER AG**

**D-5090 Leverkusen 1 Bayerwerk(DE)**

(72) Erfinder: **Becker, Robert, Dr.**
**Martin-Heidegger-Strasse 8**
**D-5090 Leverkusen 3(DE)**
Erfinder: **Goldmann, Gerd, Dr.**
**Emil-Feinendegen-Strasse 1**
**D-4150 Krefeld 12(DE)**
Erfinder: **v. Gizycki, Ulrich, Dr.**
**Wiembachallee 24**
**D-5090 Leverkusen 3(DE)**
Erfinder: **v. Bonin, Wulf, Dr.**
**Droste-Hülshof-Strasse 9**
**D-5068 Odenthal(DE)**

(54) **Leichtverbundwerkstoff.**

(57) Leichtverbundwerkstoffe die eine Hohlräume enthaltende Thermoplastmatrix und dreidimensional geordnete, über 50 mm lange Verstärkungsfasern enthalten Verbundwerkstoffe, die in einer Thermoplastmatrix zu einer dreidimensionalen Anordnung befähigte, über 50 mm lange Verstärkungsfasern in komprimiertem Zustand enthalten; die Herstellung solcher Werkstoffe, eine Vorstufe für solche Werkstoffe sowie Formteile und Fertigprodukte, die aus solchen Werkstoffen bestehen oder diese enthalten.

EP 0 321 735 A2

## Leichtverbundwerkstoff

Die Erfindung betrifft einen Leichtverbundwerkstoff, der Verstärkungsfasern in einer Thermoplastmatrix enthält, einen Verbundwerkstoff, der durch thermische Behandlung unter Volumenvergrößerung in diesen Leichtverbundwerkstoff übergeht, Verfahren zur Herstellung des Leichtverbundwerkstoffs und des Verbundwerkstoffs und Formteile, die den Leichtverbundwerkstoff enthalten oder daraus bestehen.

Es sind schon kompakte Verbundwerkstoffe bekannt, die Verstärkungsfasern in einer Thermoplastmatrix enthalten. Dazu gehören plattenförmige Halbzeuge mit Verstärkungen durch Gewebe, überwiegend zweidimensionale Gestricke, Gewirke, unidirektionale Faserlagen, Vliese und Matten mit anisotroper oder quasiisotroper Faseranordnung.

Solche Verbundwerkstoffe weisen im allgemeinen brauchbare Zugfestigkeiten, Biegefestigkeiten und Schlagzähigkeiten sowie ein brauchbares Energieabsorptionsvermögen auf, jedoch auch ein relativ hohes Raumgewicht.

Solche Werkstoffe (Halbzeuge), beispielsweise glasmattenverstärkte Thermoplaste, können diskontinuierlich auf Taktpressen oder kontinuierlich auf Doppelbandpressen hergestellt werden. Durch Umformen kann man daraus Fertigteile erhalten, in denen Verstärkungsfasern in einem kompakten thermoplastischen Kontinuum vorliegen.

Neben solchen kompakten Verbundwerkstoffen gibt es auch bereits Verbundwerkstoffe mit niedrigerem Raumgewicht, beispielsweise Verbundwerkstoffe mit einem schaum- oder wabenartigen Kern und festen Deckschichten. Kern und Deckschichten müssen dabei getrennt hergestellt und z.B. durch Kleben miteinander verbunden werden. Die Herstellung ist also aufwendig, die mechanischen Eigenschaften häufig nicht zufriedenstellend.

Bekannte Verstärkungsfasern enthaltende und niedrige Raumgewichte aufweisende Verbundwerkstoffe enthalten ausschließlich Duromere als Kunststoffmatrix. Wenn diese ausgehärtet sind, ist die Form des Verbundwerkstoffs nicht mehr veränderbar.

Bei einem kürzlich bekannt gewordenen Typ eines Verstärkungsfasern enthaltenden Verbundwerkstoffs liegen die Verstärkungsfasern als Kettgewirke vor, in das Noppen eingeformt sind. Dieses Gewirke ist mit Phenolharzen fixiert und deshalb thermisch ebenfalls nicht mehr verformbar (siehe Hoechst High Chem Magazin Nr. 3, 1987, S. 55).

Weiterhin beschreibt EP-A-O 148 763 Thermoplast-Verstärkungsfaser-Kombinationen mit 20 bis 70 Gew.-% Verstärkungsfasern. Die Verstärkungsfasern liegen ungeordnet in Form einer Matte vor und zeigen beim Erhitzen eine Volumenvergrößerung. Es wird ausdrücklich darauf hingewiesen, daß diese Volumenvergrößerung nur dann optimal abläuft, wenn die Verstärkungsfasern nicht länger als 50 mm sind.

Es wurde nun ein Leichtverbundwerkstoff gefunden, der dadurch gekennzeichnet ist, daß er in einer Hohlräume enthaltenden Thermoplastmatrix dreidimensional geordnete, über 50 mm lange Verstärkungsfasern enthält.

Bei den dreidimensional geordneten Vestärkungsfasern kann es sich um über 50 mm lange bis endlose Verstärkungsfasern handeln, die z.B. als Einzelfasern (Monofile), Rovings, Stränge, Garne, Zwirne oder Seile vorliegen können. Bevorzugt sind dreidimensionale Anordnungen, die aus Einzelfilamenten aufgebaut sind. Vorzugsweise weisen die einzelnen Filamente Durchmesser im Bereich von 0,5 bis 25 μm und Längen von 50 mm bis endlos auf. Unter endlosen Verstärkungsfasern bzw. Filamenten werden solche verstanden, die im allgemeinen eine Länge von über 50 m aufweisen, im speziellen aber solche, deren Länge etwa der Längenausdehnung der jeweiligen Leichtverbundwerkstoffteile entspricht.

Der chemische Aufbau der Verstärkungsfasern kann von der unterschiedlichsten Art sein. Wesentlich ist nur, daß die Verstärkungsfasern einen höheren Erweichungs- bzw. Schmelzpunkt besitzen, als die jeweils vorliegende Thermoplastmatrix. Beispiele für Fasermaterialien sind anorganische Materialien wie silikatische und nichtsilikatische Gläser der verschiedensten Art, Kohlenstoff, Bor, Siliciumcarbid, Metalle, Metallegierungen, Metalloxide, Metallnitride, Metallcarbide und Silikate, sowie organische Materialien wie natürliche und synthetische Polymere, beispielsweise Polyacrylnitrile, Polyester, ultrahochgereckte Polyolefinfasern, Polyamide, Polyimide, Aramide, Liquid-crystal-Polymere, Polyphenylensulfide, Polyetherketone, Polyetheretherketone, Polyetherimide, Baumwolle und Cellulose. Bevorzugt sind hochschmelzende Materialien, beispielsweise Gläser, Kohlenstoff, Aramide, Liquid-crystal-Polymere, Polyphenylensulfide, Polyetherketone, Polyetheretherketone und Polyetherimide.

Die Verstärkungsfasern können in dem erfindungsgemäßen Leichtverbundwerkstoff gleichmäßig verteilt sein, sie können jedoch auch in bestimmten Teilen des Werkstoffs, z.B. in den Randbereichen und/oder besonderen Verstärkungszonen, in einem größeren Anteil vorhanden sein als in anderen Teilen des Werkstoffes.

Es ist ein wesentliches Merkmal des erfindungsgemäßen Leichtverbundwerkstoffs, daß die über 50 mm langen Verstärkungsfasern dreidimensional angeordnet sind. Man kann dies erreichen, indem man von einem Gebilde aus Verstärkungsfasern ausgeht, das beispielsweise einen Hohlraumanteil von mindestens 30 Vol.-%, vorzugsweise von 50 bis 97 Vol.-%, aufweist und dieses, z.B. wie weiter unten detailliert beschrieben, mit einem geeigneten Thermoplasten imprägniert.

Man arbeitet dabei bei erhöhter Temperatur und unter Druck, wobei die Dicke des Gebildes aus Verstärkungsfasern abnimmt. Bei einem Druck von beispielsweise 50 bar während der Imprägnierung nimmt die Dicke des Gebildes aus Verstärkungsfasern im allgemeinen mindestens um 10 %, vorzugsweise um 40 bis 97 % ab. Zu erfindungsgemäßen Leichtverbundwerkstoffen kann man gelangen, indem man das imprägnierte Gebilde aus Verstärkungsfasern bei geringerem Druck als während der Imprägnierung oder drucklos thermisch behandelt. Dabei dehnt sich das imprägnierte Gebilde aus Verstärkungsfasern aus, vorzugsweise in Richtung der Flächennormalen, zu einem Leichtverbundwerkstoff, der in einer Hohlräume enthaltenden Thermoplastmatrix dreidimensional geordnete Verstärkungsfasern enthält.

In dem imprägnierten Gebilde aus Verstärkungsfasern und Thermoplast, das noch nicht thermisch nachbehandelt ist (im folgenden auch als Verbundwerkstoff bezeichnet), haben die Verstärkungsfasern demnach nicht nur die übliche Funktion der Verbesserung mechanischer Eigenschaften wie z.B. Zugfestigkeit, Biegefestigkeit, Schlagzähigkeit und Energieabsorption, sondern auch die Funktion bei der thermischen Behandlung (nach der Imprägnierung mit Thermoplasten) eine Ausdehnung oder Aufblähung und damit das Entstehen einer Hohlräume enthaltenden Thermoplastmatrix, die dreidimensional geordnete Verstärkungsfasern enthält, zu bewirken.

Geeignete Ausgangsgebilde aus über 50 mm langen Verstärkungsfasern sind z.B. alle in Dickenrichtung kompressiblen Gewebe, Gewirke, Gestricke, Geflecte, Gelege, Vliese, Nähwaren und Häkelwaren, die den oben angegebenen Mindest-Hohlraumanteil und bei Druckanwendung die oben angegebene Mindest-Dickenverringerung aufweisen.

Bevorzugte Gebilde aus Verstärkungsfasern sind solche mit mehrlagigen Gewebebindungen (sog. Abstandsgewebe), insbesondere mit Fäden, die zumindest teilweise parallel zur Flächennormalen verlaufen, solche, die durch dreidimensionales Flechten erhältlich sind, solche, die mit der sogenannten Through-The-Thickness-Braiding-Methode erhältlich sind (siehe R.T. Brown, 30th National Sampe Symposium, USA, March 19-21 (1985)), solche mit kompressiblen Strick- und/oder Wirkbindungen und solche kompressible räumliche Gebilde, die durch Verwirken, Vernähen, Verstricken, Legen und/oder Verflechten von ebenen oder auch räumlichen textilen Gebilden (wie Geweben, Gestricken, Gewirken, Geflechten, Gelegen, Vliesen, Näh-und/oder Häkelwaren) erhältlich sind.

Bevorzugt sind auch alle Arten von Hochflorwaren, beispielsweise auf Strickmaschinen, Kettwirkautomaten oder Raschelmaschinen hergestellte Bindungen mit Plüschfäden, Plüschschlingen oder gezielt eingebrachten Futterfäden, sowie Frottierbindungen aller Art und Schneidplüsch. Dazu gehören auch kompressible Spezialgewirke, die auf Raschelmaschinen mit Spezialeinrichtungen, beispielsweise Vlies-, Deckenbruch-, Verbund- und Kreppeinrichtungen hergestellt wurden. Insbesondere gehören dazu Pelz-Gestricke oder Pelz-Gewirke, bei denen ein parallisiertes oder wirres Vlies so von den Nadeln der Maschine aufgenommen wurde, daß aus dem Vlies und einem zugeführten Faden Maschen gebildet werden, die das Vlies zusammenhalten. Diese Hochflorwaren, Spezialgewirke und Pelz-Gestricke sind vorzugsweise zweilagig so angeordnet, daß die gekräuselten Seiten oder die Vliesseiten einander zugewandt sind, so daß in den Außenzonen des sandwichartigen Gebildes höhere Verstärkungsfaser-Gehalte vorliegen.

Ebenfalls geeignet sind somit auch alle Mehrlagen-Textilkonstruktionen, wie z.B. Mehrlagengewebe - auch solche, in denen mehrere Schichten durch Polfäden verbunden sind.

Besonders bevorzugt sind Gestricke und Gewirke, die in Rechts/Rechts-(RR)-Bindung mit zwei Nadelreihen erhältlich sind, also z.B. RR-Flachgestricke, RR-Rundgestricke und RR-Flachgewirke wie sie z.B. auf Kettenwirkautomaten oder Raschelmaschinen erhältlich sind.

Bei den Strickbindungen kommen z.B. RR-Gestricke der Reihe 1/1, 2/2 ... n/n in Frage, weiterhin Bindungen vom Typ 1/2, 1/3 ... 1/n; 2/3, 2/4 ... 2/n und allgemein m/n. Ebenso sind RRG-Bindungen (Rechts/Rechts/gekreuzt) und RRg-Bindungen (Rechts/Rechts/gerippt) von Interesse und RR-Bindungen mit Henkeln, insbesondere alle Musterungen nach Art des Fang und Perlfang. Dazu gehören auch Muster, bei denen beispielsweise durch Anordnung von Henkeln gezielt Noppen und andere punktförmige oder lineare Verdickungen eingebracht wurden. Auch sogenannte Webstrickbindungen (s. Weber: Die Wirkerei und Strickerei, Melliand, Heidelberg, 1981, S. 80-83) oder entsprechende Wirkbindungen, die dehnungsarme Kombinationen von Maschen, Flottungen und Henkeln darstellen, sind von Interesse.

Vorteilhaft sind auch Bindungen, die mit gezogenen Nadeln erhältlich sind, beispielsweise die in den Figuren 1 bis 5 gezeigten 2/2- und 3/3-Bindungen.

3

Kurze Erläuterung der Figuren 1 bis 5:

x bedeutet gezogene Nadel,

. bedeutet vorhandene Nadel.

Figur 1 zeigt eine 2/2 RR-Bindung mit Nadeleinsatz 2:1.

Figur 2 zeigt eine 3/3 RR-Bindung mit Nadeleinsatz 3:1.

Figur 3 zeigt eine 3/3 RR-Bindung mit Nadeleinsatz 3:2.

Figur 4 zeigt eine 3/2 RR-Bindung, bei der die Zahl der rechten Maschenseiten auf der Vorder- und Rückseite gleich ist.

Figur 5 zeigt eine 3/2 RR-Bindung, bei der die Zahl der rechten Maschenseiten auf der Vorder- und Rückseite das Verhältnis 3:2 aufweist.

Bei Bindungen mit m = n ist hinsichtlich der Anzahl der rechten Maschenseiten auf beiden Seiten ein symmetrischer Aufbau möglich (siehe Figur 4), aber auch ein asymmetrischer (siehe Figur 5). Das Verstärkungsverhältnis zwischen den sich berührenden Oberflächen mehrlagiger Gebilde aus Verstärkungsfasern kann also für die jeweilige Anwendung des Leichtverbundwerkstoffs maßgeschneidert werden. Beispielsweise können zwei Lagen des in Figur 5 dargestellten Gestrickes so aufeinanderliegen, daß außen mehr Verstärkungsfasern vorliegen als innen (siehe Figur 6, entlang den Linien A-A und B-B liegen mehr Verstärkungsfasern vor als dazwischen). So kann in einer Art Sandwichstruktur eine erhöhte Biegefestigkeit erzielt werden. Ähnliche Konstruktionen wie die in Figur 6 dargestellte können auch mit anderen textilen Bindungen und/oder durch Kombination verschiedener Textilien realisiert werden.

Die große Vielfalt der möglichen Maschenbindungen erlaubt es, die Anordnung der Verstärkungsfasern auf die jeweilige Anwendung hin zu optimieren.

Der erfindungsgemäße Leichtverbundwerkstoff kann eine oder mehrere Lagen der Ausgangsgebilde aus Verstärkungsfasern mit dreidimensional geordneten Fasern enthalten In verschiedenen Lagen können die Verstärkungsfasern gleich oder unterschiedlich ausgerichtet sein. Zusätzlich zu den dreidimensional geordneten Verstärkungsfasern können erfindungsgemäße Leichtverbundwerkstoffe Deck- und/oder Zwischenschichten aus beliebigen anderen Materialien enthalten, beispielsweise Verbundlagen mit vorwiegend ein- oder zweidimensional angeordneten Verstärkungsfasern, etwa Gewebe in Leinwandbindung.

Die Thermoplastmatrix erfindungsgemäßer Leichtverbund werkstoffe kann aus den verschiedensten thermoplastischen Materialien bestehen. Wesentlich ist, daß der Thermoplast ein niedrigeres Erweichungsintervall bzw. Schmelzpunkt besitzt als das Material, aus dem die Verstärkungsfasern bestehen. In Frage kommen beispielsweise Thermoplaste im weitesten Sinne, d.h. Stoffe, die sich reversibel oder intermediär thermoplastisch verhalten, z.B. thermoplastische Kunststoffe und thermoplastische Phasen von Duromeren und IPN-Systeme (IPN = Interpenetrating Polymeric Network) mit thermoplastischen Eigenschaften. Beispiele für Thermoplaste sind Polyolefine, Vinylpolymerisate wie Polyvinylhalogenide, Polyvinylester, Polyvinylether, Polyacrylate, Polymethacrylate, Polymethacrylimide und organische Celluloseester, sowie Polyamide. Polyarylamide, Polyurethane, Polyharnstoffe, Polyimide, Polyester, Polyarylester, Polyether, Polystyrole, Polyhydantoine, Polyphenylenoxide, Polyphenylensulfide, Polysulfone, Polycarbonate, Polyestercarbonate, Polyacetale, Phenolharzvorläufer, Furanharzvorläufer, Melaminharzvorläufer, Epoxiharzvorläufer, Verbindungen mit polymerisations- und/oder polyadditionsfähigen Doppelbindungen, Polyimidvorläufer, Poly etherketone, Polyetheretherketone, Polyetherketonketone, Polyethersulfone, Polyphenylsulfone, Polyetherimide, Polyamidimide, Polybismaleinimide, Polyfluoralkene, und Liquid-crystal-Polymere; ferner unpolare thermoplastische Polymere (z.B. Polyolefine), denen polare Gruppen aufgepfropft wurden.

Bevorzugte Thermoplaste sind Polyethylene, Polypropylene, Polybutylene, Polypentene, Polyvinylchloride, Polymethylmethacrylate, Polyacrylnitrile, Polymethacrylnitrile, Polystyrol enthaltende Mehrphasenkunststoffe wie ABS, Polyamide des Typs 6, Polyamide des Typs 6-6, Polyurethane, Polyethylenterephthalate, Polybutylenterephthalate, Bisphenol-A-Polycarbonate, Polyphenylensulfide, Polyetherketone, Polyetheretherketone, Polyetherketonketone, Polyethersulfone, Polyphenylsulfone, Polysulfone, Polyetherimide, Polyamidimide, Polyestercarbonate, Liquid-crystal-Polymere und Polypropylen, dem polare Gruppen aufgepfropft wurden.

Die Thermoplaste können auch in den verschiedensten Kombinationen vorliegen, z.B. als Copolymere, Blockpolymere, Pfropfpolymere, Mischpolymere und Polymergemische.

Der chemische Aufbau der Verstärkungsfasern und des Thermoplasts kann auch gleichartig sein, z.B. können beide aus Polyester bestehen. Wesentlich ist aber auch in diesem Fall, daß das Material, aus dem die Verstärkungsfasern bestehen ein höheres Erweichungsintervall bzw. Schmelzpunkt hat als das Material, aus dem die Thermoplastmatrix besteht.

Im erfindungsgemäßen Leichtverbundwerkstoff kann das Gewichtsverhältnis von Verstärkungsfasern zu Thermoplast in weiten Grenzen variieren. Es sollte jedoch genügend Thermoplast vorhanden sein, um die

4

vorhandenen Verstärkungsfasern weitgehend oder vollständig zu imprägnieren und genügend Verstärkungsfasern, um eine ausreichende verstärkende Wirkung zu erzielen. Beispielsweise kann der Anteil der Verstärkungsfasern am erfindungsgemäßen Leichtverbundwerkstoff 15 bis 90 Gew.-% betragen. Vorzugsweise liegt dieser Anteil im Bereich 30 bis 85 Gew.-%.

Eine besondere Ausführungsform der erfindungsgemäßen Leichtverbundwerkstoffe ist dadurch gekennzeichnet, daß die Thermoplastmatrix nicht nur Hohlräume enthält, die durch das Aufblähen des Werkstoffs infolge Aufrichtens der Verstärkungsfasern (bei der nach der Imprägnierung der Verstärkungsfasern mit Thermoplast stattfindenden thermischen Behandlung) entstanden sind, sondern auch Hohlräume, die durch in die Thermoplastmatrix eingebrachte und/oder darin freigesetzte Gase entstanden sind. Für diesen Zweck geeignete Gase sind beispielsweise Kohlendioxid, Wasserdampf, Dämpfe leicht flüchtiger Lösungsmittel wie Methanol, Aceton oder Methylenchlorid, Sauerstoff, Stickstoff, Luft, Ammoniak, Amine, Tetrafluorkohlenstoff und fluorierte, gegebenenfalls zusätzlich chlorierte Kohlenwasserstoffe. Solche Gase können auch aus in die Thermoplastmatrix eingebrachten Feststoffen erhalten werden, die beim Erhitzen ein Gas abspalten. Ein Beispiel für einen solchen Feststoff ist Isatosäureanhydrid. Solche Gase können auch aus dem Thermoplastmaterial freigesetzt werden, und zwar aus chemischer Bindung oder physikalischer Lösung. Vorzugsweise werden solche Gase erzeugt durch thermisches Freisetzten von in dem Thermoplastmaterial physikalisch gelösten oder über van der Waals-Kräfte gebundenen Lösungsmitteln oder Wasser. Man kann hierzu das Thermoplastmaterial besonders vorbehandeln, um genügend freisetzbares Gas zur Verfügung zu haben. Häufig genügt hierfür jedoch eine sowieso durchzuführende Behandlung des Thermoplastmaterials, beispielsweise das Konditionieren von Polyamiden mit Wasser oder das Behandeln von Polycarbonaten mit Chlorkohlenwasserstoffen. Man kann, um eine schaumartige Ausbildung des Thermoplastmaterials zu erhalten, auch einen Aufschäumvorgang ablaufen lassen, wie er beispielsweise bei der Polyurethanherstellung oder der Polystyrol-Schäumung üblich ist.

In die Thermoplastmatrix eingebrachte und/oder darin freigesetzte Gase können auch bewirken, daß sich die Hohlräume im erfindungsgemäßen Leichtverbundwerkstoff leichter bilden (beim thermischen Behandeln nach der Imprägnierung der Verstärkungsfasern mit dem Thermoplasten), aber praktisch keine zusätzlichen Hohlräume entstehen.

Eine weitere besondere Ausführungsform der erfindungsgemäßen Leichtverbundwerkstoffe ist dadurch gekennzeichnet, daß die in der Thermoplastmatrix vorhandenen Hohlräume modifiziert sind. Beispiele hierfür sind Hohlräume die ganz oder teilweise Gase, Flüssigkeiten und/oder Feststoffe enthalten. Bei den Feststoffen kann es sich beispielsweise um Brandschutzmittel oder dünne Metallschichten handeln und bei den Gasen und Flüssigkeiten um solche, die die Wärmeleitfähigkeit erhöhen oder erniedrigen. Die Hohlräume können gegebenenfalls auch von einer Flüssigkeit zu Wärmeaustausch- oder sonstigen Zwecken durchströmt werden.

Die vorliegende Erfindung betrifft weiterhin einen Verbundwerkstoff, der dadurch gekennzeichnet ist, daß er in einer Thermoplastmatrix zu einer dreidimensionalen Ordnung befähigte, über 50 mm lange Verstärkungsfasern in komprimiertem Zustand enthält.

Hinsichtlich Qualität und Quantität der Verstärkungsfasern und der Thermoplaste kann der erfindungsgemäße Verbundwerkstoff mit dem erfindungsgemäßen Leichtverbundwerkstoff identisch sein. Im Gegensatz zum erfindungsgemäßen Leichtverbundwerkstoff enthält der erfindungsgemäße Verbundwerkstoff jedoch wenige bis keine Hohlräume in der Thermoplastmatrix und die Verstärkungsfasern befinden sich in komprimiertem, d.h. flachgedrücktem Zustand. Eventuell bereits im erfindungsgemäßen Verbundwerkstoff vorhandene Hohlräume können gegebenen falls zu erfindungsgemäßen Leichtverbundwerkstoffen führen, die gleichzeitig einen hohen Gehalt an Verstärkungsfasern und ein niedriges Raumgewicht aufweisen.

Erfindungsgemäße Verbundwerkstoffe kann man erhalten, indem man vorgeht wie weiter oben zur Herstellung eines erfindungsgemäßen Leichtverbundwerkstoffes beschrieben, jedoch die thermische Behandlung nach der Imprägnierung nicht durchführt. Bei den erfindungsgemäßen Verbundwerkstoffen handelt es sich also um Zwischenprodukte zur Herstellung erfindungsgemäßer Leichtverbundwerkstoffe. Charakteristisch für erfindungsgemäße Verbundwerkstoffe ist, daß sie zumindest in einem Teilbereich ihrer Fläche sowohl weniger dick sind als das noch nicht mit Thermoplast imprägnierte, gegebenenfalls mehrlagige Gebilde aus Verstärkungsfasern als auch weniger dick als der jeweils aus dem erfindungsgemäßen Verbundwerkstoff erhältliche erfindungsgemäße Leichtverbundwerkstoff.

Die Überführung eines erfindungsgemäßen Leichtverbundwerkstoffs in ein Form- bzw. Fertigteil, z.B. eine Sitzschale, kann gleichzeitig mit der thermischen Behandlung, die nach der Imprägnierung der Verstärkungsfasern mit einem Thermoplasten, d.h. mit dem erfindungsgemäßen Verbundwerkstoff, durchzuführen ist, erfolgen. Deshalb kann sowohl der erfindungsgemäße Verbundwerkstoff als auch der erfindungsgemäße Leichtverbundwerkstoff Handelsware sein.

Auch eine Vorstufe des erfindungsgemäßen Verbundwerkstoffs kann Handelsware sein, beispielsweise dreidimensional geordnete, über 50 mm lange Verstärkungsfasern im Gemisch mit Thermoplasten, wobei die Verstärkungsfasern noch nicht mit dem Thermoplasten imprägniert sind. Hierbei handelt es sich bevorzugt um ein dreidimensionales Gebilde, das den Thermoplasten in Faserform enthält, beispielsweise in Form eines Mischgestrickes, Mischgewebes, Mischgeflechtes, Mischgeleges oder in Form von Näh- oder Häkelwaren, die Thermoplast-und Verstärkungsfasern enthalten. Solche Vorstufen des erfindungsgemäßen Verbundwerkstoffs lassen sich, gegebenenfalls unmittelbar nacheinander und in einem Werkzeug, zunächst durch eine Wärmebehandlung unter Druck in einen erfindungsgemäßen Verbundwerkstoff überführen (wobei die Verstärkungsfasern mit dem Thermoplasten imprägniert werden) und anschließend drucklos oder unter gegenüber der Imprägnierstufe vermindertem Druck in einen erfindungsgemäßen Leichtverbundwerkstoff überführen. Die vorliegende Erfindung betrifft auch solche Vorstufen für erfindungsgemäße Verbundwerkstoffe.

Erfindungsgemäße Verbundwerkstoffe und deren Vorstufen können außer Verstärkungsfasern und Thermoplasten gegebenenfalls zusätzlich Gase enthalten, vorzugsweise in gebundener oder gelöster Form, und/oder Flüssigkeiten und/oder Feststoffe, die zur Bildung zusätzlicher Hohlräume und/oder deren Modifizierung in erfindungsgemäßen Leichtverbundwerkstoffen dienen können bzw. das Aufrichten der Verstärkungsfasern unterstützen.

Die vorliegende Erfindung betrifft auch Verfahren zur Herstellung von Leichtverbundwerkstoffen und Verbundwerkstoffen.

Das erfindungsgemäße Verfahren zur Herstellung von Leichtverbundwerkstoffen ist dadurch gekennzeichnet, daß man ein Gebilde aus Verstärkungsfasern mit einem Hohlraumanteil von mindestens 30 Vol.-% bei einer Temperatur oberhalb der Glasübergangstemperatur des Thermoplasten und bei einem Druck, unter dem die Dicke des Gebildes aus Verstärkungsfasern während des Imprägnierens um mindestens 10 % abnimmt, mit einem Thermoplasten imprägniert und danach drucklos oder unter niedrigerem Druck als während des Imprägnierens eine thermische Behandling bei einer Temperatur vornimmt, bei welcher die Dicke des imprägnierten Materials zumindest in Teilbereichen um mindestens 10 % zunimmt.

Das erfindungsgemäße Verfahren zur Herstellung von Verbundwerkstoffen ist dadurch gekennzeichnet, daß man ein Gebilde aus Verstärkungsfasern mit einem Hohlraumanteil von mindestens 30 Vol.-% bei einer Temperatur oberhalb der Glasübergangstemperatur des Thermoplasten und bei einem Druck unter dem die Dicke das Gebildes aus Verstärkungsfasern während des Imprägnierens um mindestens 10 % abnimmt, mit einem Thermoplasten imprägniert.

Geeignete und bevorzugte Materialien und Anordnungen für das einzusetzende Gebilde aus Verstärkungsfasern, geeignete und bevorzugte Thermoplaste und gegebenenfalls vor oder während der Imprägnierung zuzusetzende weitere Stoffe und Materialien sind weiter oben beschrieben.

Im allgemeinen kann die geforderte Dickenabnahme des Gebildes aus Verstärkungsfasern während des Imprägnierens durch die Anwendung eines Absolutdrucks im Bereich 1,2 bis 1000 bar erzielt werden, häufig auch die Anwendung eines Absolutdruckes im Bereich 1,5 bis 200 bar.

Der Thermoplast kann mit dem Gebilde aus Verstärkungsfasern auf verschiedene Weise zusammengebracht werden. Beispielsweise kann man den Thermoplast als Schmelze (z.B. aus einer an einem Extruder befindlichen Breitschlitzdüse), als Lösung oder Suspension (vor oder während dem Imprägniervorgang ist dann das Lösungs- bzw. Suspensionsmittel zu entfernen) oder als Pulver (z.B. durch Wirbelsintern oder Pulverspritzen) zufügen. Der Thermoplast kann z.B. auch in das Gebilde aus Verstärkungsfasern eingearbeitet sein, beispielsweise durch gemeinsames textiles Verarbeiten von Verstärkungsfasern und Thermoplastfäden oder Mischfäden aus Verstärkungsfasern und Thermoplastfäden. Der Thermoplast kann dabei auch als Folienbändchen oder Garn vorliegen. Schließlich kann der Thermoplast auch als Folie oder Granulat auf die Oberfläche des Gebildes aus Verstärkungsfasern gebracht werden, bei mehrlagigen Gebilden aus Verstärkungsfasern gegebenenfalls auch zwischen einzelne Lagen. Auch die Herstellung des Thermoplasten auf dem Gebilde aus Verstärkungsfasern, z.B. durch in-situ Polymerisation, ist möglich.

Der Thermoplast kann auf einmal oder auch in mehrere Portionen unterteilt nacheinander zugegeben werden. Es ist auch möglich, verschiedene Anteile des Thermoplasten in verschiedener Form einzubringen, beispielsweise einen Teil in Fadenform als Mischtextil mit den Verstärkungsfasern und einen Teil als Granulat, Folie oder Schmelze. Es können auch gleichzeitig oder nacheinander verschiedene Thermoplasten eingebracht werden.

Die erfindungsgemäßen Verfahren können z.B. in beheizbaren statischen Pressen oder in kontinuierlich arbeitenden Pressen, z.B. Doppelbandpressen, durchgeführt werden. Die benötigte Wärme kann durch Vorheizen einzelner oder aller Ausgangsmaterialien und/oder durch Beheizung der verwendeten Presse eingebracht werden.

Die thermische Behandlung nach der Imprägnierung findet im allgemeinen bei Temperaturen oberhalb der Glastemperatur des jeweiligen Thermoplasten statt.

Die thermische Behandlung kann beendet werden, wenn, zumindest in Teilbereichen, die Dicke des imprägnierten Materials um mindestens 10 % zugenommen hat. Vorzugsweise beträgt die Dickenzunahme das 1,8 bis 20 fache. Bei dieser Dickenzunahme bilden sich in der Thermoplastmatrix Hohlräume, die das Raumgewicht erniedrigen. Deshalb wird das sich bildende Produkt als Leichtverbundwerkstoff bezeichnet.

Im allgemeinen erfolgt die Dickenzunahme fast augenblicklich, nachdem der Thermoplast fließfähig geworden ist. Die thermische Behandlung kann z.B. in einer hydraulischen Presse, einer Doppelbandpresse, einer hydraulischen Presse mit eingelegter Form oder einfach durch Öffnen des Apparates, in dem die Imprägnierung stattgefunden hat, durchgeführt werden. Bei der Verwendung von Pressen kann man durch entsprechende Einstellung des Spaltes oder durch die Verwendung von Preßformen mit entsprechenden Kavitäten Leichtverbundwerkstoffe mit vorgegebener Geometrie in den jeweils gewünschten Dickenverhältnissen erhalten. Man kann so Halbzeuge, z.B. ebene Platten, aber auch gebrauchsfertige Formteile, z.B. Sitzschalen, aus erfindungsgemäßen Leichtverbundwerkstoff herstellen. Vorzugsweise wird die Spaltbreite so gewählt, daß in der Endphase des Aufblähens ein leicht erhöhter Druck im Leichtverbundwerkstoff entsteht.

Durch entsprechende Ausbildung des Spaltes an der Presse, in der die thermische Behandlung stattfindet, kann man Produkte erhalten, die über die gesamte Fläche gleich dick oder unterschiedlich dick sind. Es können auch mehrere Lagen, auch von unterschiedlicher Form und/oder unterschiedlicher Verstärkungsfaserorientierung, von erfindungsgemäßen Verbundwerkstoffen gemeinsam in einer Preßvorrichtung in erfindungsgemäße Leichtverbundwerkstoffe überführt werden. Dabei ergeben sich besonders große Variationsmöglichkeiten hinsichtlich Form und Dicke der erhältlichen Produkte.

Grundsätzlich sind sowohl die Techniken des Formpressens wie auch des Fließpressens anwendbar.

Die Herstellung erfindungsgemäßer Leichtverbundwerk stoffe und von Formteilen aus erfindungsgemäßen Leichtverbundwerkstoffen kann beispielsweise in zwei aufeinander folgenden Takten in der Form einer hydraulischen Presse durchgeführt werden (sogenannte Zweitakt-Verfahren). Hierbei kann das Gebilde aus Verstärkungsfasern (oder Zuschnitte davon) nach Zufügung von Thermoplasten zwischen Platten oder in eine Form eingelegt werden. Im ersten Takt kann man dann unter Temperatur und Druck in der beschriebenen Weise einen erfindungsgemäßen Verbundwerkstoff herstellen. Im zweiten Takt kann dann der bewegliche Preßstempel um einen gewissen Betrag geöffnet werden, so daß man dann sofort die thermische Behandlung durchführen kann, bei der man ein Formteil aus erfindungsgemäßen Leichtverbundwerkstoff erhält. Wenn nur ein Vorformling (precursor) aus dem erfindungsgemäßen Verbundwerkstoff hergestellt werden soll, wird das Produkt nach dem ersten Takt oder nach nur unvollständiger thermischer Behandlung aus der Presse entnommen.

Ein vorteilhaftes Verfahren zur kontinuierlichen Herstellung von flächigen Leichtverbundwerkstoffen der erfindungsgemäßen Art ist das sogenannte Zwei-Zonen-Verfahren auf einer Doppelbandpresse, bei dem man den Leichtverbundwerkstoff in zwei aufeinanderfolgenden Zonen einer Doppelbandpresse mit unterschiedlichem Bandabstand herstellt. In einer ersten Druckzone wird dabei das Gebilde aus Verstärkungsfasern mit Thermoplast zusammengebracht und unter den angegebenen Bedingungen von Druck und Temperatur zu einem erfindungsgemäßen Verbundwerkstoff verpreßt. In einer zweiten Zone, die sich von der ersten im wesentlichen durch einen größeren Bandabstand auszeichnet, kann dann die beschriebene thermische Behandlung stattfinden unter Ausbildung eines erfindungsgemäßen Leichtverbundwerkstoffes. Bei diesem Verfahren können endlose flächige Materialien hergestellt werden.

Die vorliegende Erfindung betrifft schließlich auch Formteile und Fertigprodukte, welche die zuvor beschriebenen Leichtverbundwerkstoffe enthalten oder daraus bestehen. Bei solchen Formteilen und Fertigprodukten kann es sich beispielsweise um ebene Platten oder flächige oder gewölbte Teile handeln, wie sie beispielsweise im Fahrzeug-, Flugzeug-, Schiff-, Hoch-, Tief-, Apparate-und Gerätebau benötigt werden. Als Beispiel seien genannt Aufbauten für Fahrzeuge, Flugzeuge und Schiffe, Aufbauten für Transportfahrzeuge und Kühlfahrzeuge, Fahrzeugbodengruppen, Chassis, Gehäuse, Verkleidungen, Treppen, Dächer, Wände, Decken, Rahmen, Fensterrahmen, Badewannen, Schwimmbäder, Hallenkonstruktionen, Fußböden, Tore, Türen, Container, Tragwerke, Hütten, Uferbefestigungen, Abstützplatten, Schalungen, Planken, Tanks, Silos, Behälter, Sitzschalen, Schränke, Lärmdämmwände, Helme, Boote, Surfbretter, Musikinstrumente, Platinen, Parabolantennen, Holme, Rippen, Kühlschranktüren, Filter und Wärmetauscher. Bei den Form- und Fertigteilen kann es sich um tragende, selbsttragende, mittragende und nichttragende Teile handeln. Sie zeichnen sich durch geringe Raumgewichte, Korrosionsbeständigkeit, hohe Schlagzähigkeit, hohe Festigkeit, hohe Steifigkeit, hohe Energie- und Schallabsorption und gute Verschweißbarkeit aus. Innerhalb einer Schicht weisen solche Formteile keine Neigung zum Delaminieren, eine hohe Schadenstoleranz, eine geringe Rißfortpflanzung und eine weitere thermische Verformbarkeit aus. Letztere erleichtert auch das Recyclieren bereits verwendeter Teile.

Der erfindungsgemäße Leichtverbundwerkstoff weist auch eine hohe Imprägniergüte aus und ist, im

7

Gegensatz zu allen bisher bekannten Leichtbaukörpern mit textiler Verstärkungsstruktur, thermisch umformbar. Ein wesentlicher Vorteil des erfindungsgemäßen Leichtverbundwerkstoff ist es, daß beim Urformen des Fertigteils oder beim Umformen des Halbzeugs oder von Fertigteilen deutlich unterschiedliche Dicken bzw. unterschiedliche spezifische Gewichte in einem Formteil und in einem Arbeitsgang realisiert werden können. Die Dicken können beispielsweise zwischen der Dicke des eingesetzten erfindungsgemäßen Verbundwerkstoffes und der Maximaldicke des Leichtverbundwerkstoffes variieren, die wesentlich durch die Konstruktion des Verstärkungstextils bestimmt ist. Außerdem können bei mehrlagigen Gebilden durch entsprechende Temperaturführung gezielt nur einzelne Lagen in Leichtverbundwerkstoffe überführt werden. Die thermische Behandlung, bei der sich die Verstärkungsfasern aufrichten und die Hohlräume entstehen, kann auch unterbrochen und separat zu Ende geführt werden.

Mit der Dicke ändern sich im allgemeinen das Raumgewicht und die mechanischen Eigenschaften, insbesondere die Biegesteifigkeit, die Druck- und Zugfestigkeit und die Energieabsorption. Damit bietet sich die Möglichkeit, ein Formteil aus erfindungsgemäßem Leichtverbundwerkstoff allein durch unterschiedliche Dicke des Werkstoffes auf die konkrete Anwendung hin maßzuschneidern. Weitere Gestaltungsmöglichkeiten sind durch die Anordnung der Verstärkungsfasern in dem ursprünglich eingesetzten Gebilde aus Verstärkungsfasern gegeben.

Der erfindungsgemäße Verbundwerkstoff und der erfindungsgemäße Leichtverbundwerkstoff können in beliebigen Formen vorliegen, beispielsweise in ebener Form (z.B. Platten oder Bahnen) oder auch in gewölbten Formen, wie sie durch Pressen in Preßformen auf einer statischen Presse erhältlich sind.

Die erfindungsgemäßen Verbundwerkstoffe sind wegen der in ihnen vorliegenden komprimierten Anordnung der Verstärkungsfasern und der thermischen Aufblähbarkeit zu Leichtverbundwerkstoffen prinzipiell neu. Ebenso ist der erfindungsgemäße Leichtverbundwerkstoff wegen seiner gut mit Thermoplast imprägnierten und dreidimensional geordneten Verstärkungsfaserstruktur mit hohem Anteil an Hohlraumvolumen und seiner thermischen Urformbarkeit und thermischen Umformbarkeit prinzipiell neu.

Es ist ausgesprochen überraschend, daß mit der vorliegenden Erfindung Leichtverbundwerkstoffe mit den aufgezeigten (siehe auch die Beispiele) hervorragenden Eigenschaften zur Verfügung gestellt werden konnten, da gemäß der EP-A-O 148 763 dies mit längeren Verstärkungsfasern als dort angewendet nicht erwartet werden konnte.

## Beispiele

### Beispiel 1

Auf einer Aluminiumplatte der Größe 30 x 30 cm mit seitlichen Nagelleisten wurde ein flächiges 3/3-Rechts-Rechts-Gestrick aufgespannt, beidseitig mit einer Teflon®-Folie versehen, mit einer Stahlplatte bedeckt und einer auf 230°C vorgeheizten statischen Plattenpresse mit einem Absolutdruck von 2 bar 5 Minuten lang vorgepreßt. Das eingesetzte Gestrick war ein Mischgestrick aus Polyamid-6-Fäden und Endlos-Glasfasern, daß 48,5 Gew.-% Glasfasern enthielt. Drei auf diese Weise vorgepreßte Mischgestricke mit zwei Lagen Glasgewebe in Leinwandbindung (bezogen von Fa. Interglas, Ulm, Nr. 92150) und zwei Lagen Polyamid-6-Folie einer Dicke von 0,1 mm wurden wie folgt aufeinandergeschichtet:
1. Glasgewebe
2. Polyamid-6-Folie
3. Gestrick-Vorpreßling
4. Gestrick-Vorpreßling (Maschenrichtung senkrecht zu 3.)
5. Gestrick-Vorpreßling (Maschenrichtung parallel zu 3.)
6. Polyamid-6-Folie
7. Glasgewebe.

Diese so aufgeschichteten Lagen wurden in einen Stahlrahmen der lichten Weite 30 x 30 x 0,35 cm gelegt, nachdem sie außen mit Teflon®-besprühten Aluminiumfolien be deckt worden waren. Das Ganze wurde dann zwischen zwei 2,5 mm dicke Stahlplatten in einer auf 230°C vorgeheizten statischen Plattenpresse bei einem Absolutdruck von 2 bar 10 Minuten lang belassen und dann mit 21 bar Absolutdruck 5 Minuten lang thermisch verpreßt. Danach wurde unter diesem Druck auf Raumtemperatur abgekühlt.

Der so hergestellte Verbundwerkstoff mit einer Dicke von 3,5 mm wurde anschließend 1 Stunde lang gewässert und dann in einen Metallrahmen mit der lichten Weite 30 x 30 x 1,5 cm gelegt, mit Teflon®-besprühten Stahlplatten beidseitig abgedeckt und dann in der vorgeheizten Presse bei 270° C 10 Minuten lang bei einem Preßdruck von unter 1,5 bar absolut belassen. Hierbei blähte sich der Verbundwerkstoff zu einem Leichtverbundwerkstoff auf, dessen Dicke ca. 14 mm, dessen Dichte ca. 0,39 g/cm³, dessen Glasgehalt 55 Gew.-% und dessen Polyamid-6-Gehalt 45 Gew.-% betrug.

Im folgenden wird auf den so hergestellten Leichtverbundwerkstoff als erfindungsgemäßes Material 1 Bezug genommen.

Zu Vergleichszwecken wurden Messungen auch an im Handel erhältlichen Verbundwerkstoffen vorgenommen. Hierzu kamen zum Einsatz:

a) Sandwich-Platten mit Aluminiumwaben und Deckschichten aus 0,5 mm starkem Aluminiumblech, sog. "M-Board-Platten", die unter der Bezeichnung Aerolam®-Platten erhältlich sind. Im folgenden wird auf diesen Verbundwerkstoff als Vergleichsmaterial I Bezug genommen.

b) Sandwich-Platten mit Aramid-Waben und Phenolharz-Deckschichten, die unter der Bezeichnung Fibrelam®-Platten erhältlich sind. Im folgenden wird auf diesen Verbundwerkstoff als Vergleichsmaterial II Bezug genommen.

Beispiel 2 (Kurzstab-Biegeversuch)

Zuerst wurden aus den zu messenden Materialien Kurzstäbe herausgesägt mit den Abmessungen 80 x 30 x 14 mm und in Anlehnung an DIN LN 29 971 (Luftfahrtnorm für Kurzstabbiegeversuche) Dreipunkt-Biegeversuche durchgeführt (Finnendurchmesser 6 mm, Durchmesser der Auflager je 10 mm, Auflagerabstand 5 x 14 = 70 mm, maximale Durchbiegung 14 mm, Belastungsgeschwindigkeit 1 mm/min). Unter diesen Bedingungen traten beim erfindungsgemäßen Material 1 sogar bei einer Durchbiegung von 14 mm keine Schubbrüche auf, während bei den entsprechend dimensionierten Vergleichsmaterialien I und II eine bleibende Zerstörung mit Ablösen der Deckflächen und Auftrennen der Wabenanordnung zu konstatieren war. Die verbleibenden Deformationen betrugen:

erfindungsgemäßes Material 1: 4 mm
Vergleichsmaterial I: 13 mm
Vergleichsmaterial II: 6 mm.

Nach langsamem Zurücknehmen der Biegekraft wurden die Proben von der Rückseite her nochmals unter denselben Biegebedingungen belastet. Während bei den Vergleichsmaterialien I und II nur noch ca. 5 % der Anfangssteifigkeit vorhanden war, besaß das erfindungsgemäße Material 1 nach diesem zweiten Biegevorgang noch ca. 50 % der Anfangssteifigkeit.

Das zeigt eine geringere Vorschädigung des erfindungsgemäßen Materials 1 und damit eine höhere Schadenstoleranz desselben an (sog. gutartiges Schadensverhalten).

Beispiel 3 (Plattendurchstoßversuch)

Aus den zu messenden Materialien wurden Proben mit den Abmessungen 60 x 60 x 14 mm herausgesägt und Plattendurchstoßversuche in Anlehnung an DIN 53 443 mit einer potentiellen Gesamtenergie von 100 Nm durchgeführt. Hierbei wurde das Vergleichsmaterial I glatt durchstoßen und das Vergleichsmaterial II um über 90 % zusammengedrückt, wobei sich die obere Deckschicht unter Rißbildung ablöste, während sich das erfindungsgemäße Material 1 lediglich im Bereich des eindringenden Dornes um ca. 60 % einbuchtete. Das bedeutet: Der Schadensbereich blieb beim erfindungsgemäßen Material 1 lokal begrenzt.

Die untere Deckschicht hatte nur im Falle des erfindungsgemäßen Materials 1 keine nennenswerten Schäden aufzuweisen. Auch dies zeigt das prinzipiell gutartige Schädigungsverhalten des erfindungsgemäßen Materials 1 an.

Im einzelnen wurden folgende Energien gemessen:

| | aufgenommene Energie (Nm) | |
| --- | --- | --- |
| | bei Rißbeginn | bei Endzustand |
| erfindungsgemäßes Material 1 | 18 (kleiner Anriß) 70 (Riß der oberen Deckschicht) | 80 (Einbuchtung) |
| Vergleichsmaterial I | 12 (Riß der oberen Deckschicht) | 80 (Durchstoß) |
| Vergleichsmaterial II | 9 (Riß der oberen Deckschicht) | 43 (Zusammendrücken und Ablösen der Deckschicht) |

Beispiel 4 (Biegeversuch analog Biegeschwellversuch)

In Anlehnung an die bei DIN 53 398 vorgeschlagene Geometrie des Probekörpers beim Biegeschwellversuch wurde aus dem erfindungsgemäßen Material 1 ein Probekörper mit den Abmessungen 250 x 30 x 14 mm herausgesägt. Bei einem Auflagerabstand von 240 mm, einer Finnenbreite von 40 mm, einem Finnenradius von 100 mm und einem Durchmesser der Auflager von 10 mm wurde ein statischer Biegeversuch vorgenommen.

Bei diesem Versuch zeigte sich, daß beim Einwirken der Biegekraft (Maximum 347 N) sich lediglich die obere Deckschicht (Druckzone) über die gesamte Staboberfläche zu einem gewissen Grade lockerte und partiell ablöste, was ein deutlicher Hinweis dafür ist, daß Spannungsspitzen großflächig homogenisiert werden und, daß sich die lokal aufgebrachte Gesamtenergie relativ gleichmäßig über die gesamte Probe verteilt.

In der Zugzone traten keine sichtbaren Schädigungen auf.

Beispiele 5 bis 14

Analog Beispiel 1 wurden weitere erfindungsgemäße Leichtverbundwerkstoffe hergestellt. Die Einzelheiten sind in der nachfolgenden Tabelle 1 angegeben.

In der Tabelle 1 wurden folgende Abkürzungen benutzt:

| GFS | = | Glasfaser |
| --- | --- | --- |
| GG | = | Glasgewebe in Leinwandbindung |
| GS | = | Gestrick (auf einer Flachstrickmaschine hergestellt) |
| GVPA | = | Glasfasergewebeverstärktes Polyamid, Dicke 3,5 mm, Glasanteil 70 Gew.-%. |
| P | = | zur Nachbarlage parallele Maschenanordnung |
| PA | = | Polyamid-6 |
| PAFO | = | Polyamid-6-Folie |
| PAFS | = | Polyamid-6-Faser |
| PC | = | Polycarbonat |
| PCFS | = | Polycarbonat-Faser |
| RR | = | Recht-Rechts |
| s | = | gegenüber Nachbarlage senkrechte Maschenanordnung |

EP 0 321 735 A2

Tabelle 1

| Bei-spiel Nr. | Art des Gestrickes (% = Gew.-%) (Höhe = mm) | Anordnung | Art des Thermo-plasten | Anteile Glas (Faser + Gewebe) (Gew.-%) | Eigenschaften des hergestellten Leichtver-bundwerkstoffes | | |
|---|---|---|---|---|---|---|---|
| | | | | | Dicke (mm) | Dichte (g/cm$^3$) | Aussehen und mechanische Eigenschaften |
| 5 | 2/2 RR GFS 50,7 % PCFS 49,3 % | GS/GSp | PC | 50,7 | 8 | 0,425 | gleichmäßige Maschen-richtung; stabiler Verbund |
| 6 | 3/3 RR GFS 51,5 % PAFS 48,5 % | GG/PAFO GS/GSs/ GSp/PAFO/GG | PA | 55 | 12 | 0,48 | Glatte, gleichmäßige Platte; keine Schubbrüche hohe Schadenstoleranz, mittlere Kraftaufnahme |
| 7 | 2/2 RR GFS 68 % PAFS 32 % Maschenhöhe: 3,5 | GS/GSs/ GS | PA | 68 | 15 | 0,49 | Glatte Platte mit gleichmäßiger Maschen-richtung; mittlere Scher-festigkeit (verglichen mit Vergleichsmaterial II) |
| 8 | 2/2 RR GFS 68 % PAFS 32 % Maschenhöhe: 7 | GG/PAFO/ GS/GSs/ PAFO/GG | PA | 71 | 12 | 0,39 | Glatte, gleichmäßige Platte; keine Schub-brüche, geringe Kraftaufnahme |

EP 0 321 735 A2

Tabelle 1 (Fortsetzung)

| Bei-<br>spiel<br>Nr. | Art des Gestrickes<br>(% = Gew.-%)<br>(Höhe = mm) | Anordnung | Art des<br>Thermo-<br>plasten | Anteile<br>Glas (Faser<br>+ Gewebe)<br>(Gew.-%) | Eigenschaften des hergestellten Leichtver-<br>bundwerkstoffes | | |
|---|---|---|---|---|---|---|---|
| | | | | | Dicke<br>(mm) | Dichte<br>(g/cm³) | Aussehen und mechanische<br>Eigenschaften |
| 9 | 3/3 RR<br>GFS 68 %<br>PAFS 32 %<br>Maschenhöhe: 3,5 | GG/PAFO/<br>GS/GSs/<br>GS/PAFO/<br>GG | PA | 71 | 15 | 0,48 | Glatte, gleichmäßige<br>Platte; keine Schub-<br>brüche, hohe Schadens-<br>toleranz |
| 10 | 3/4 RR<br>GFS 68 %<br>PAFS 32 % | GG/PAFO/<br>GS/GSs/<br>GS/PAFO/<br>GG | PA | 71 | 18 | 0,40 | Glatte, gleichmäßige<br>Platte; keine Schub-<br>brüche, hohe Schadens-<br>toleranz, geringe<br>bleibende Deformation |
| 11 | 3/3 RR<br>GFS 51,55 %<br>PAFS 48,45 % | GG/PAFO/<br>GS/GVPA/<br>GS/PAFO/<br>GG | PA | 58 | 12 | 0,77 | Glatte, gleichmäßige<br>Platte; sehr hohe inter-<br>laminare Scherfestigkeit,<br>sehr hohe Kraftaufnahme |
| 12 | 1/1 Perlfang<br>GFS 51,55 %<br>PAFS 48,45 %<br>118 Maschen auf<br>300 mm Breite | GS/GSs/<br>GS/ | PA | 52 | 15 | 0,22 | Glattes, gleichmäßiges<br>Wabenmuster; keine Schub-<br>brüche, sehr geringe<br>Kraftaufnahme |

Tabelle 1 (Fortsetzung)

| Bei-spiel Nr. | Art des Gestrickes ($\%$ = Gew.-$\%$) (Höhe = mm) | Anordnung | Art des Thermo-plasten | Anteile Glas (Faser + Gewebe) (Gew.-$\%$) | Eigenschaften des hergestellten Leichtver-bundwerkstoffes | | |
|---|---|---|---|---|---|---|---|
| | | | | | Dicke (mm) | Dichte ($g/cm^3$) | Aussehen und mechanische Eigenschaften |
| 13 | 1/1 Perlfang GFS 51,55 $\%$ PAFS 48,45 $\%$ 130 Maschen auf 300 mm Breite | GS/GSs/ GS | PA | 52 | 15 | 0,31 | Glattes, gleichmäßiges Wabenmuster; keine Schubbrüche, mittlere Schadenstoleranz |
| 14 | 3/3 RR GFS 51,55 $\%$ PAFS 48,45 $\%$ | GG/PAFO/ GG/PAFO/ GS/GSs/ FS/PAFO/ GG/PAFO/GG | PA | 59 | 15 | 0,43 | Glatte, gleichmäßige Platte; keine Schub-brüche, sehr geringe bleibende Deformation |

Beispiel 15: Kohlenstoff-Fasern anstatt Glasfasern

In Analogie zu Beispiel 1 wurden 3 übereinander geschichtete, vorgepreßte Lagen aus nachfolgend beschriebenem Mischgestrick thermisch verpreßt und gewässert, und es gelang ebenfalls, den Verbundwerkstoff zu einem Leichtverbundwerkstoff aufzublähen. Folgendes Mischgestrick wurde eingesetzt:
- Typ des 1/1 Perlfangs
- 41,5 Gew.-% endlose Kohlenstoff-Fasern Typ 3KE, XAS) mit 200 tex
- 58,5 Gew.-% endlose Polyamid 6-Fäden (®Enkalon der Fa. Enka-Akzo) zu 3X94 tex.

| Erzielte Daten: | | | |
|---|---|---|---|
| Bezeichnung der hergestellten Probe | Dicke (mm) | Raumgewicht (g/cm$^3$) | Bemerkungen |
| Verbundwerkstoff | 3 | 1,35 | |
| Leichtverbundwerkstoff I | 12 | 0,36 | |
| Leichtverbundwerkstoff II | 16 | 0,29 | Energieaufnahme bei 40% Stauchung: 3fach im Vergleich zum Glasfaser-Leichtverbundstoff; 7fach im Vergleich zu Aramid-honeycomb-core |
| Leichtverbundwerkstoff III | 17 | 0,27 | |

EP 0 321 735 A2

**Ansprüche**

1. Leichtverbundwerkstoff, dadurch gekennzeichnet, daß er in einer Hohlräume enthaltenden Thermoplastmatrix dreidimensional geordnete, über 50 mm lange Verstärkungsfasern enthält.

2. Leichtverbundwerkstoff nach Anspruch 1, dadurch gekennzeichnet, daß die Verstärkungsfasern ein höheres Erweichungsintervall bzw. Schmelzpunkt besitzen, als die jeweils vorliegende Thermoplastmatrix.

3. Leichtverbundwerkstoff gemäß Ansprüchen 1 und 2, dadurch gekennzeichnet, daß der Anteil Verstärkungsfasern am gesamten Werkstoff 15 bis 90 Gew.-% beträgt.

4. Verbundwerkstoff, dadurch gekennzeichnet, daß er in einer Thermoplastmatrix zu einer dreidimensionalen Ordnung befähigte, über 50 mm lange Verstärkungsfasern in komprimiertem Zustand enthält.

5. Verfahren zur Herstellung von Leichtverbundwerkstoffen, dadurch gekennzeichnet, daß man ein Gebilde aus über 50 mm langen Verstärkungsfasern mit einem Hohlraumanteil von mindestens 30 Vol.-% bei einer Temperatur oberhalb der Glasübergangstempertur des Thermoplasten und bei einem Druck, unter dem die Dicke des Gebildes aus Verstärkungsfasern während des Imprägnierens um mindestens 10 % abnimmt mit einem Thermoplasten imprägiert und danach drucklos oder unter niedrigerem Druck als während des Imprägnierens eine thermische Behandlung bei einer Temperatur vornimmt, daß die Dicke des imprägnierten Materials zumindest in Teilbereichen um mindestens 10 % zunimmt.

6. Verfahren zur Herstellung von Verbundwerkstoffen, dadurch gekennzeichnet, daß man ein Gebilde aus über 50 mm langen Verstärkungsfasern mit einem Hohlraumanteil von mindestens 30 Vol.-% bei einer Temperatur oberhalb der Glasübergangstemperatur des Thermoplasten und bei einem Druck, unter dem die Dicke des Gebildes aus Verstärkungsfasern während des Imprägnierens um mindestens 10 % abnimmt mit einem Thermoplasten imprägniert.

7. Verfahren nach Ansprüchen 5 und 6, dadurch gekennzeichnet, daß man es in beheizbaren statischen Pressen oder in Doppelbandpressen durchführt.

8. Verfahren nach Anspruch 5, dadurch gekennzeichnet, daß man es in zwei aufeinanderfolgenden Takten in der Form einer hydraulischen Presse durchführt.

9. Verfahren nach Anspruch 5, dadurch gekennzeichnet, daß man den Leichtverbundwerkstoff in zwei aufeinanderfolgenden Zonen einer Doppelbandpresse mit unterschiedlichem Bandabstand herstellt.

10. Verfahren nach Anspruch 5, dadurch gekennzeichnet, daß gase in die Thermoplast-Matrix eingeführt oder an dieser freigesetzt werden während der thermischen Behandlung ohne Druck oder unter niedrigerem Druck als während des Imprägnierens.

11. Leichtverbundwerkstoff gemäß Ansprüchen 1 bis 3, dadurch gekennzeichnet, daß die Thermoplastmatrix auch Hohlräume enthält, die durch darin eingebrachte und/oder darin freigesetzte Gase entstanden sind.

12. Formteile und Fertigprodukte, dadurch gekennzeichnet, daß sie aus dem Leichtverbundwerkstoff gemäß Ansprüchen 1 bis 3 und 11 bestehen oder diesen enthalten.

13. Vorstufe für Verbundwerkstoffe gemäß Anspruch 4, dadurch gekennzeichnet, daß sie dreidimensional geordnete, über 50 mm lange Verstärkungsfasern im Gemisch mit Thermoplasten enthält, wobei die Verstärkungsfasern noch nicht mit dem Thermoplasten imprägniert sind.